Europäisches Patentamt

European Patent Office

Office européen des brevets

(19)

(11) Numéro de publication : **0 329 546 B1**

## (12) FASCICULE DE BREVET EUROPEEN

(45) Date de publication du fascicule du brevet :
**17.07.91 Bulletin 91/29**

(21) Numéro de dépôt : **89400409.2**

(22) Date de dépôt : **14.02.89**

(51) Int. Cl.⁵ : $G01V\ 1/22$, G08C 15/00

(54) **Méthode et système de transmission semi-séquentielle utilisant simultanément plusieurs fréquences de transmission radio pour relier un ensemble de réception sismique à un laboratoire central de commande et d'enregistrement.**

(30) Priorité : **19.02.88 FR 8802104**

(43) Date de publication de la demande :
**23.08.89 Bulletin 89/34**

(45) Mention de la délivrance du brevet :
**17.07.91 Bulletin 91/29**

(84) Etats contractants désignés :
**DE GB IT NL**

(56) Documents cités :
**WO-A-86/05024**
**GB-A- 2 055 467**
**US-A- 3 221 305**
**US-A- 3 657 470**

(73) Titulaire : **INSTITUT FRANCAIS DU PETROLE**
**4, Avenue de Bois-Préau**
**F-92502 Rueil-Malmaison (FR)**

(72) Inventeur : **Rialan, Joseph**
**15, rue des Bigots**
**F-92190 Meudon (FR)**

## Description

L'invention a pour objet une méthode et un système de transmission semi-séquentielle par voie hertzienne, de signaux entre des appareils d'acquisition de données d'un ensemble de réception sismique et un laboratoire central de commande et d'enregistrement au moyen de plusieurs fréquences de transmission et avec une répartition automatique des différentes fréquences disponibles entre les appareils d'acquisition.

Les méthodes modernes de prospection sismique comportent l'utilisation d'appareils d'acquisition de données répartis à intervalles réguliers sur une distance de parfois plusieurs kilomètres. Ils sont adaptés chacun à collecter des signaux sismiques captés par un ou plusieurs récepteurs appropriés (hydrophones ou géophones) en réponse à des ébranlements transmis dans le sol par une source sismique et renvoyés par les discontinuités du sous-sol. Les signaux qu'ils collectent sont échantillonnés, numérisés et stockés dans une mémoire avant leur transmission en temps réel ou différé à un laboratoire central de commande et d'enregistrement.

Différents systèmes de transmission par radio permettant de centraliser des données sismiques collectées par des appareils d'acquisition, sont décrits dans la demande de brevet française EN. 86/07.930 (EP-A- 250 280), dans les brevets français FR 2 511 772 et 2 197 182, dans le brevet britannique GB 2 055 467 ou les brevets US 4 152 691, 4 086 504, 3 987 406, par exemple.

La transmission des données recueillies par les dispositifs d'acquisition peut aussi être effectuée séquentiellement, chacun d'eux transmettant à son tour ses propres données soit directement au laboratoire central soit par l'intermédiaire d'autres dispositifs d'acquisition intermédiaires ou d'éléments-relais. Des moyens d'enregistrement sont utilisés alors pour mémoriser les données recueillies, durant le temps nécessaire à leur transfert séquentiel au laboratoire central.

Ces méthodes ne nécessitent qu'un canal hertzien à large bande. Mais si le nombre d'appareils d'acquisition successivement interrogés est grand, la durée totale de transfert et donc l'intervalle de temps entre deux cycles successifs d'émission-réception sismique, deviennent importants, ce qui contribue à allonger la durée d'exploration des profils sismiques étudiés.

La transmission au laboratoire central des données collectées peut être effectuée en temps réel et simultanément pour tous les appareils d'acquisition. Cela requiert l'emploi et donc la disponibilité d'un grand nombre de canaux de transmission hertzienne à large bande ou à bande étroite, de fréquences différentes. La mise en oeuvre d'un tel système est souvent difficile dans la pratique. Chacun des appareils doit être équipé d'un émetteur-récepteur radio individualisé par une fréquence particulière de transmission et le laboratoire central, d'ensembles de détection sélectifs pour séparer les signaux modulant les différentes porteuses. Le travail préparatoire de réglage et de mise en place est rendu plus long et plus complexe. En outre la transmission simultanée des données est souvent perturbée par des phénomènes d'intermodulation intervenant à la réception au laboratoire central entre des porteuses de niveaux très différents qui émanent d'émetteurs proches et d'émetteurs plus lointains.

L'utilisation d'un système de transmission mixte où un nombre limité d'appareils d'acquisition transfèrent simultanément au laboratoire central les données qu'ils ont collectées au moyen d'un certain nombre de porteuses de fréquences différentes, peut constituer une alternative intéressante dans la mesure où l'on peut ainsi réduire la durée totale de centralisation des données. Mais la mise en place d'un tel système est délicate. Les différents appareils d'acquisition après leur installation sur le terrain, doivent être individualisés. Chacun d'eux est alors réglé pour émettre ou recevoir sur une fréquence parmi les fréquences disponibles. Les appareils d'acquisition n'étant pas forcément disposés sur le terrain en respectant l'ordre croissant de leurs numéros de série respectifs, pour des raisons pratiques de mise en place, l'opérateur qui les règle doit relever le numéro du canal radio associé à chacun d'eux. Ceci peut être une source d'erreurs notamment lorsqu'un appareil d'acquisition défaillant doit être remplacé par un autre dont le numéro de série est différent.

La méthode et le système de transmission selon l'invention permettant d'éviter les inconvénients ci-dessus énoncés.

La méthode selon l'invention permet la transmission semi-séquentielle de signaux, par voie hertzienne entre un ensemble de N appareils d'acquisition de données d'un dispositif de réception sismique et un laboratoire central de commande et d'enregistrement, au moyen d'un nombre restreint n de fréquences de transmission différentes (f1, f2...fn) très inférieur au nombre d'appareils d'acquisition N dudit ensemble, chacun d'eux étant adapté à collecter des signaux reçus par au moins un récepteur sismique disposé le long d'un profil sismique à étudier, à numériser et enregistrer lesdits signaux et, sur commande du laboratoire central, à transmettre vers celui-ci par radio, les signaux mémorisés.

Elle est remarquable en ce qu'elle comporte :
– l'affectation à chaque appareil d'un numéro d'ordre en fonction de sa position le long du profil sismique,
– la subdivision de l'ensemble des appareils d'acquisition en groupes contenant chacun au plus n appareils d'acquisition,
– l'émission par le laboratoire d'un signal de commande de transmission désignant le numéro d'ordre d'un premier appareil d'acquisition de chacun des groupes successivement,

– la comparaison par chacun des N appareils d'acquisition de l'ensemble, du numéro d'ordre désigné par le signal de commande avec le numéro d'ordre qui lui est propre et, si ledit écart est compatible avec le nombre de fréquences disponible,

– la commutation des moyens de transmission sur une fréquence de transmission correspondant de façon prédéterminée audit écart, les appareils d'acqusion d'un même groupe se répartissant ainsi toutes les fréquences de transmission disponibles, et

– une transmission de signaux entre les appareils d'acquisition du même groupe et le laboratoire central, chacun utilisant la fréquence particulière imposée par ladite comparaison.

Le système de transmission selon l'invention est remarquable en ce que tous les appareils d'acquisition dudit ensemble et le laboratoire central sont pourvus chacun de moyens d'émission et de réception radio pouvant être commutés indifféremment sur l'une quelconque des fréquences de transmission (f1, f2...fn), chacun des appareils d'acquisition comportant des moyens de mémorisation pour un numéro d'ordre dépendant de sa position le long du profil sismique, des moyens pour déterminer l'écart entre le numéro d'ordre qui lui est affecté, et le numéro désigné par des signaux de commande émanant du laboratoire central, et des moyens de commutation pour sélectionner parmi toutes les fréquences (f1 à fn) disponibles et, dans la limite du nombre n, une fréquence de transmission associée de façon prédéterminée audit écart.

Avec un tel système, il n'est plus nécessaire d'individualiser au préalable les différents appareils d'acquisition au moyen d'une fréquence de transmission particulière soigneusement notée. Les opérateurs peuvent les déposer un à un sur le terrain dans un ordre quelconque, en se bornant à leur affecter respectivement des numéros d'ordre correspondant à leur position réelle le long du profil sismique. La sélection de la fréquence particulière de transmission sur laquelle chacun des appareils se commute, est effectuée par chacun d'eux en fonction d'une comparaison entre un numéro d'ordre de transmission du laboratoire central par un signal de commande et son numéro d'ordre propre sans le moindre risque de confusion. La phase préparatoire à une campagne de prospection est donc grandement simplifiée.

D'autres caractéristiques et avantages de la méthode et du système de transmission selon l'invention, apparaîtront à la lecture de la description d'un mode de réalisation donné à titre d'exemple non limitatif en se référant aux dessins annexés où :

– la figure 1 montre schématiquement un ensemble de réception le long d'un profil sismique à explorer ; et

– la figure 2 montre schématiquement un appareil d'acquisition muni d'un générateur d'onde porteuse à synthèse de fréquence et de moyens de sélection.

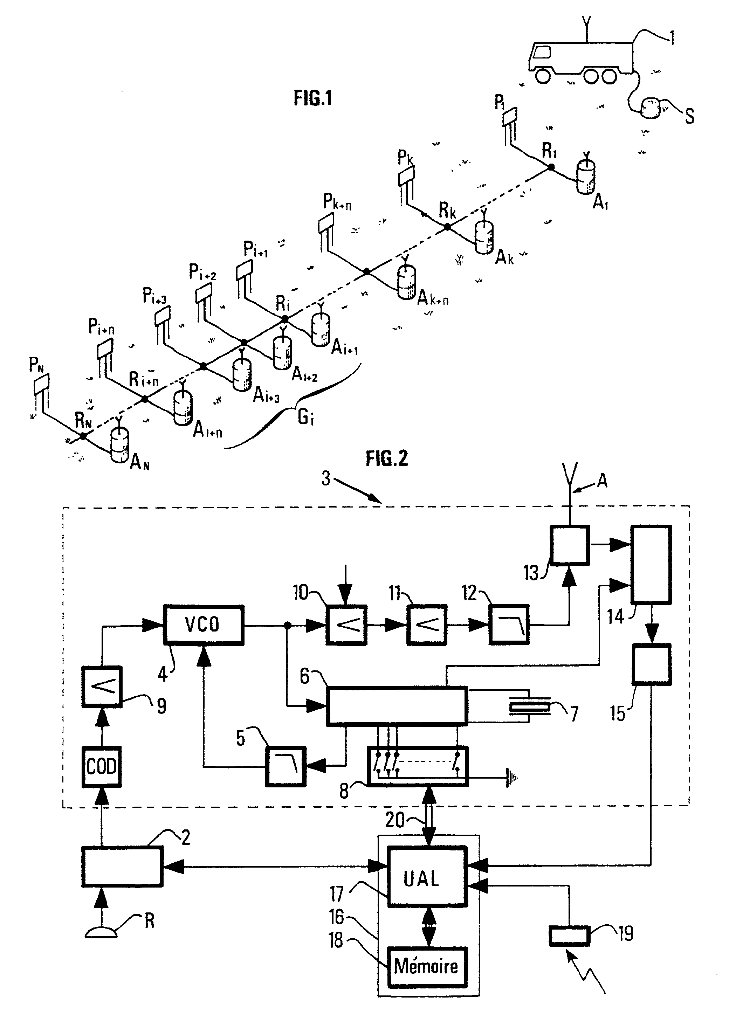

Le système selon l'invention est adapté à établir des communications entre un laboratoire central de commande et d'enregistrement installé dans un véhicule 1 (fig. 1) et un ensemble de N appareils ou de boîtiers d'acquisition de données sismiques (A1, A2... AN) répartis sur le terrain où les opérations sismiques ont lieu. Chaque appareil est adapté à collecter des signaux sismiques captés par un ou plusieurs récepteurs sismiques (R1...Ri...RN) couplés avec le sol, ces signaux correspondant à des échos sur des réflecteurs souterrains d'ébranlements appliqués au sol par une source sismique S d'un type quelconque. Les récepteurs sismiques R1 à RN sont disposés à des emplacements définis au préalable et repérés généralement par des piquets numérotés P1...Pi...PN. Les appareils d'acquisition numérisent les signaux captés et les enregistrent. A la fin de chaque cycle d'émission-réception, les appareils d'acquisition commandés en séquence par le laboratoire central, lui transmettent les données qu'ils ont mémorisées. Ils sont disposés de préférence dans des boîtiers étanches associés éventuellement à des bouées, lorsque l'on opère dans des zones recouvertes d'eau ou très humides (lacs, marécages, forêts etc).

Un dispositif de réception sismique peut comporter par exemple 200 appareils d'acquisition associés à des capteurs disposés à une cinquantaine de mètres les uns des autres.

Chaque appareil d'acquisition sismique comporte (fig 2) une unité d'acquisition 2 adaptée à amplifier les signaux reçus du récepteur R, à les échantilloner, les numériser et les mémoriser. Dans le cas où plusieurs récepteurs R sont reliés au même appareil d'acquisition, l'unité d'acquisition 2 comporte en outre un multiplexeur en tête (non représenté) comme il est bien connu. L'unité d'acquisition est associée à un ensemble d'émission-réception 3 adapté à transmettre des signaux codés avec le laboratoire central en réponse à des signaux de commande émanant de celui-ci, en utilisant une fréquence parmi un nombre restreint de fréquences porteuses f1, f2...fn, comme on le verra ci-après.

L'ensemble d'émission-réception 3 comporte un oscillateur 4 du type VCO dont la fréquence d'oscillation est déterminée par l'application d'une tension de commande issue d'un filtre passe-bas 5. L'entrée du filtre 5 est connecté à la sortie d'un circuit synthétiseur de fréquence 6 d'un type connu comportant des boucles d'asservissement de phase (PLL) et un pré-diviseur permettant d'appliquer à la fréquence de référence défini par un quartz 7, un facteur de réduction programmable. La sélection de ce facteur de réduction est opérée en commandant sélectivement des commutateurs d'un ensemble de commutateurs 8. Le signal appliqué à l'entrée du circuit synthétiseur 6 est le signal de sortie de l'oscillateur (VCO) 4. Le signal délivré par l'unité d'acquisition est appliqué à un élément de codage (COD) appliquant par exemple aux signaux sismiques numérisés le code NR7 bien connu. Les signaux codés sont ensuite amplifiés par un étage d'amplification 9 et appliqué à l'entrée "modulation" de l'oscillateur 4. La porteuse modulée disponible à la sortie de l'oscillateur 4, est appliquée à une chaine d'amplification comportant un préamplificateur 10, un amplificateur de puissance 11 et un filtre passe-bas 12, le signal amplifié étant appliqué à une antenne d'émission-réception A par l'intermédiaire d'un duplexeur d'antenne d'un type connu 13.

Au duplexeur d'antenne 13 est également connecté un récepteur de radio 14 adapté à recevoir les signaux de commande codés issus du laboratoire central, portés par un signal de fréquence bien déterminée. La démodulation des signaux reçus est effectuée en utilisant un signal produit par le circuit synthétiseur de fréquence 6. Les signaux démodulés issus du récepteur 14, sont décodés par un décodeur approprié 15 puis appliqués à un ensemble de traitement à micro-processeur 16 comportant une unité arithmétique et logique 17 et une unité de mémoire 18. L'unité 17 comporte un port d'entrée pour la connexion d'un élément d'interface 19 approprié au type de liaison. On peut utiliser par exemple un récepteur optique à infra-rouge tel que celui décrit dans la demande de brevet français EN 86/11.876 et qui permet à un opérateur de communiquer des instructions à l'appareil d'acquisition sans avoir à établir avec lui de liaison matérielle. L'élément d'interface 19 peut encore être constitué selon les cas d'un récepteur hertzien ou d'un moyen de connexion pour un câble de transmission. Une connexion 20 est établie entre l'unité arithmétique et logique 17 et l'ensemble de commutateurs 8, de manière que le facteur de réduction appliqué par celui-ci et donc la fréquence d'émission puissent être modifiés à volonté.

Le système fonctionne de la manière suivante :

Durant la phase préparatoire à une campagne de prospection sismique, les ensembles de traitement 17 de tous les appareils d'acquisition sont programmés pour :

    – engendrer n signaux de commande distincts pour l'ensemble de commutateurs 8, tels que la fréquence du signal porteur engendré par l'oscillateur VCO (4) puisse prendre n valeurs distinctes prédéterminées ; et

    – effectuer une sélection de fréquence parmi ces n possibilités en tenant compte du numéro d'ordre propre qui leur sera affecté.

Suivant un exemple pratique de réalisation, le nombre n peut être choisi égal à 4 ou 8.

Durant la phase d'installation sur le terrain où les appareils d'acquisition sont connectés respectivement à un ou plusieurs récepteurs sismiques (Ri), l'opérateur introduit dans l'unité de mémorisation 18 de chacun d'eux le numéro d'ordre lu sur le piquet de repérage correspondant (Pi), au moyen de l'élément d'interface 19. L'ensemble des N appareils d'acquisition est subdivisé en groupes de n appareils de manière que, après répartition entre eux des n fréquences de transmission disponibles, ils puissent simultanément transmettre au laboratoire central les données sismiques qu'ils mémorisent au cours des cycles successifs d'émission-réception.

On considère par exemple le cas d'un groupe Gi comportant n appareils Ai + 1, Ai + 2, Ai + 3...Ai + n, i étant un nombre inférieur à N. Le tour étant venu pour le groupe Gi de transmettre les données sismiques mémorisées, le laboratoire central envoie un ordre de transmission général précédé d'un numéro d'adresse (i + 1) qui est celui du premier appareil Ai + 1 du groupe Gi. Le numéro d'adresse (i + 1) est décodé par la totalité des N appareils d'acquisition répartis sur le terrain. En prenant ce numéro pour base, les ensembles de traitement 16 contenus dans tous les appareils chacun effectuent l'opération de sélection suivante. Ils calculent chacun la différence entre le numéro d'ordre propre inscrit dans leur unité de mémorisation 18 avec le numéro d'adresse reçu et décodé (i + 1). Si la différence est positive et strictement inférieure à n, et seulement dans ce cas ils sélectionnent une des fréquences de transmission en fonction de la valeur de l'écart.

Ainsi l'appareil d'acquisition Ai + 1 pour lequel l'écart est nul, choisit la fréquence f1. Le suivant Ai + 2 pour lequel l'écart est égal à l'unité, choisit la fréquence f2. Les suivants procèdent de manière analogue. Le dernier appareil Ai + n du groupe Gi choisit la fréquence fn. Chaque appareil d'acquisition peut donc imposer à l'ensemble des commutateurs 8 le signal adéquat pour commander le verrouillage de l'oscillateur VCO (4) à la fréquence sélectionnée.

Un ordre de transmission commun suffit donc pour déclencher la transmission simultanée des données sismiques sur les n fréquences disponibles par tous les appareils d'un même groupe.

Compte-tenu des instructions imposées aux ensembles de traitement 17, un ordre de transmission concernant un appareil d'acquisition Ai + 1 fait réagir les appareils numérotés Ai + 1, Ai + 2...Ai + n mais reste ignoré

    a) des appareils déjà interrogés, c'est-à-dire ceux pour lesquels l'écart est négatif, et

    b) de tous les appareils d'acquisition restant, n'appartenant pas au groupe interrogé, du fait que l'écart qu'il calcule est égal ou supérieur au nombre n de fréquences disponibles.

En interrogeant ainsi successivement tous les appareils d'acquisition en-tête de chacun des groupes c'est-à-dire à intervalle de valeur n les uns des autres, on peut centraliser toutes les données sismiques collectées.

Il faut noter que les appareils d'acquisition qui transmettent simultanément des signaux sont voisins les uns des autres et donc situés à des distances comparables du laboratoire central. Les risques d'intermodulation qui sont liés à l'émission simultanée de signaux de niveaux très différents, sont donc pratiquement éliminés.

Dans l'exemple décrit, la programmation qui permet aux différents ensembles de traitement de choisir un certain nombre prédéterminé n de fréquences de transmission, est effectuée initialement, avant le début d'une campagne d'exploration. Ceci n'est bien sûr pas limitatif. Les instructions de sélection peuvent porter par exemple sur un nombre initialement indéterminé de fréquences, la sélection du nombre précis étant imposée par l'opérateur au moment du dépôt des appareils d'acquisition sur le terrain ou même éventuellement par radio depuis le laboratoire central, avant le déclenchement d'un nouveau cycle d'émission-réception.

**Revendications**

1. Méthode de transmission semi-séquentielle de signaux, par voie hertzienne entre un ensemble de N appareils d'acquisition de données (A1, A2...AN) d'un dispositif de réception sismique et un laboratoire central de commande et d'enregistrement, au moyen d'un nombre restreint n de fréquences de transmission différentes (f1, f2...fn) très inférieur au nombre N d'appareils d'acquisition (A1, A2...AN) dudit ensemble, chacun d'eux étant adapté à collecter des signaux reçus par au moins un récepteur sismique (R1...RN) disposé le long d'un profil sismique à étudier, à numériser et enregistrer lesdits signaux et, sur commande du laboratoire central, à transmettre vers celui-ci par radio les signaux numérisés, caractérisée en ce qu'elle comporte :
   – l'affectation à chaque appareil d'acquisition d'un numéro d'ordre en fonction de sa position le long du profil sismique,
   – la subdivision de l'ensemble des appareils d'acquisition en groupes contenant chacun au plus n appareils d'acquisition,
   – l'émission par le laboratoire d'un signal de commande de transmission désignant le numéro d'ordre d'un premier appareil d'acquisition de chacun des groupes successivement,
   – la comparaison par chacun des N appareils d'acquisition de l'ensemble, du numéro d'ordre désigné par le signal de commande avec le numéro d'ordre qui lui est propre et, si ledit écart est compatible avec le nombre n de fréquences disponibles,

   – la commutation des moyens de transmission sur une fréquence de transmission correspondant de façon prédéterminée audit écart, les appareils d'acquisition d'un même groupe se répartissant ainsi toutes les fréquences de transmission disponibles, et
   – une transmission de signaux depuis les appareils d'acquisition du même groupe, vers le laboratoire central, chacun utilisant la fréquence particulière imposée par ladite comparaison.

2. Méthode selon la revendication 1, caractérisée en ce que l'étape de comparaison comporte la sélection parmi une liste de n fréquences de transmission disponibles, d'une fréquence associée à l'écart entre le numéro d'ordre désigné et le numéro d'ordre propre à chaque appareil d'acquisition si ledit écart est un nombre inférieur au nombre n de fréquences disponibles.

3. Méthode selon la revendication 1, caractérisée en ce que l'étape de subdivision de l'ensemble des N appareils d'acquisition en groupes comporte la sélection d'un nombre déterminé n de fréquences de transmission par lesquelles tout appareil d'acquisition de l'ensemble peut sur commande communiquer avec le laboratoire central.

4. Méthode selon la revendication 4, caractérisée en ce que le choix et le nombre de fréquences est effectué par une commande appliquée directement à chaque appareil d'acquisition.

5. Méthode selon la revendication 4, caractérisée en ce qu'elle comporte la transmission d'un signal de télécommande permettant de choisir le nombre et la valeur des fréquences utilisées.

6. Système de transmission semi-séquentielle de signaux, par voie hertzienne entre un ensemble d'appareils d'acquisition de données (A1-AN) d'un dispositif de réception sismique et un laboratoire central de commande et d'enregistrement (1) au moyen d'un nombre restreint n de fréquences de transmission (f1, f2... fn) très inférieur au nombre N d'appareils d'acquisition dudit ensemble, caractérisé en ce que tous les appareils d'acquisition dudit ensemble et le laboratoire central sont pourvus chacun de moyens d'émission et de réception radio (13) pouvant être commutés indifféremment sur l'une quelconque des fréquences de transmission (f1, f2.. fn), chacun des appareils d'acquisition comportent en outre des moyens de mémorisation pour un numéro d'ordre dépendant de sa position le long du profil sismique, des moyens pour déterminer l'écart entre le numéro d'ordre qui lui est affecté, et le numéro désigné par des signaux de commande émanant du laboratoire central, et des moyens de commutation (8) pour sélectionner parmi toutes les fréquences (f1 à fn) disponibles et, dans la limite du nombre n, une fréquence de transmission associée de façon prédéterminée audit écart.

7. Système de transmission selon la revendication 6, caractérisé en ce qu'il comporte un ensemble de traitement (16) pourvu d'une unité de calcul (17), d'une unité de mémorisation (18) et d'un élément d'interface (9) pour l'application par l'opérateur du numéro d'ordre dépendant de la position de chaque appareil d'acquisition le long du profil.

8. Système de transmission selon la revendication 6, caractérisé en ce que les moyens d'émission et de réception radio associés à chaque appareil d'acquisition comportent un oscillateur (4) commandé par une tension électrique et un circuit bouclé comportant un synthétiseur de fréquence à prédiviseur (6) appliquant à une fréquence de référence un facteur de division dépendant desdits moyens de commutation (8), une unité de réception (14) connectée à une unité de traitement (16) adaptée à déterminer ledit écart entre le numéro d'ordre qui lui est affecté et le numéro d'ordre reçu par l'unité de réception correspondante (14), et à actionner les moyens de commutation (8), l'unité de traitement (16) comportant un élément d'interface (19) pour des moyens de transmission à courte distance.

9. Système de transmission selon la revendication 6, caractérisé en ce que ledit oscillateur (4) comporte une entrée de modulation pour un signal issu d'une chaine comportant une ensemble d'acquisition (2) de signaux sismiques, un élément de codage (COD) et des moyens d'amplification (9).

## Ansprüche

1. Verfahren zur semi-sequentiellen Übertragung von Signalen per Funk zwischen einer Gesamtheit von N Erfassungsvorrichtungen für Daten (A1, A2,... AN) eines seismischen Empfangsgerätes und einem zentralen Steuerund Aufzeichnungslabor, mittels einer begrenzten Anzahl n von unterschiedlichen Übertratungsfrequenzen (f1, f2 ... fn), die sehr viel geringer als die Anzahl N von Datenerfassungsvorrichtungen (A1, A2,... AN) dieser Gesamtheit ist, von denen jede so ausgebildet ist, daß sie empfangene Daten über wenigstens einen seismischen Empfänger (R1... RN), der längs eines zu untersuchenden seismischen Profils angeordnet ist, sammelt, diese Signale digitalisiert und aufzeichnet und, auf einen Befehl des Zentrallabors hin, gegen dieses per Funk die digitalisierten Signale überträgt, dadurch gekennzeichnet, daß es umfaßt :
   – die Zuordnung einer Ordnungszahl zu jeder Datenerfassungsvorrichtung als Funktion ihrer Position längs des seismischen Profils,
   – die Unterteilung der Gesamtheit der Datenerfassungsvorrichtungen in Gruppen, welche je höchstens n Erfassungsgeräte enthalten, die Ausgabe, durch das Labor, eines Übertragungssteuersignals, das die Ordnungszahl einer ersten Erfassungsvorrichtung nacheinander für jede der Gruppen bezeichnet,
   – den Vergleich, durch jede der N Erfassungsvorrichtungen der Gesamtheit, der durch das Steuersignal bezeichneten Ordnungszahl mit der ihr eigenen Ordnungzahl und, wenn die Abweichung kompatibel mit der Anzahl n verfügbarer Frequenzen ist,
   – die Umschaltung der Übertragungsmittel auf eine Übertragungsfrequenz, die in vorbestimmter Weise dieser Abweichung entspricht, wobei die Erfassungsvorrichtungen ein und der gleichen Gruppe sich so die sämtlichen verfügbaren Übertragungsfrequenzen aufteilen und
   – eine Signalübertragung von den Datenerfassungsvorrichtungen der gleichen Gruppe zum Zentrallabor, wobei jede die besondere ihr durch diesen Vergleich aufgeprägte Frequenz nutzt.

2. Verfahren nach Anspruch 1, dadurch gekennzeichnet, daß die Vergleichsstufe die Auswahl, aus einer Liste von n verfügbaren Übertragungsfrequenzen, einer Frequenz umfaßt, die der Abweichung zwischen der bezeichneten Ordnungszahl und der jeder Erfassungsvorrichtung eigenen Ordnungszahl, wenn diese Abweichung eine Zahl kleiner als die Zahl n verfügbarer Frequenzen ist, zugeordnet ist.

3. Verfahren nach Anspruch 1, dadurch gekennzeichnet, daß die Stufe der Unterteilung der Gesamtheit der N Erfassungsvorrichtungen in Gruppen die Auswahl einer bestimmten Anzahl n von Übertragungsfrequenzen umfaßt, über die jede Erfassungsvorrichtung der Gesamtheit auf einen Befehl hin mit dem Zentrallabor in Verbindung treten kann.

4. Verfahren nach Anspruch 4, dadurch gekennzeichnet, daß die Auswahl und die Anzahl der Frequenzen durch eine Steuerung ausgeführt wird, die direkt an jede Erfassungsvorrichtung gelegt ist.

5. Verfahren nach Anspruch 4, dadurch gekennzeichnet, daß es die Übertragung eines Fernsteuerungssignals umfaßt, welches es ermöglicht, Anzahl und Wert der verwendeten Frequenzen auszuwählen.

6. Semi-sequentielles Signalübertragungssystem per Funk zwischen einer Gesamtheit von Datenerfassungsvorrichtungen (A1-AN) einer seismischen Empfangsvorrichtung und einem zentralen Steuerund Aufzeichnungslabor (1) vermittels einer begrenzten Anzahl n von Übertragungsfrequenzen (f1, f2,... fn), die sehr viel kleiner als die Anzahl N von Erfassungsvorrichtungen dieser Gesamtheit ist, dadurch gekennzeichnet, daß die sämtlichen Erfassungsvorrichtungen dieser Gesamtheit sowie das Zentrallabor je mit Funk-Sende- und -Empfangsmitteln (13) ausgestattet sind, welche beliebig auf eine beliebige der Übertragungsfrequenzen (f1, f2,... fn) umgeschaltet werden können, wobei jede der Erfassungsvorrichtungen im übrigen Speichermittel für eine Ordnungszahl, die von ihrer Position längs des seismischen Profils abhängen, Mittel zur Bestimmung der Abweichung zwischen der ihr zugeordneten Ordnungszahl und der Zahl, welche durch vom Zentrallabor stammende Steuersignale bezeichnet ist, und Umschaltmittel (8) umfaßt, um aus den verfügbaren Frequenzen (f1 bis fn) und innerhalb der Grenzen der Anzahl n eine Übertragungsfrequenz auszuwählen, die in vorbestimmter Weise dieser Abweichung zugeordnet ist.

7. Übertragungssystem nach Anspruch 6, dadurch gekennzeichnet, daß es eine Verarbeitungsanordnung (16), versehen mit einer Recheneinheit (17), einer Speichereinheit (18) und einem Interfaceelement (9), umfaßt, um durch den Operator die Ordnungszahl anzulegen, die von der Position jeder Erfassungsvorrichtung längs des Profils abhängt.

8. Übertragungssystem nach Anspruch 6, dadurch gekennzeichnet, daß die jeder Erfassungsvorrichtung zugeordneten Funk-Sende- und -Empfangsmittel einen von einer elektrischen Spannung gesteuerten Oszillator (4) und eine Schleifenschaltung, die einen Frequenzsynthesizer mit Vorteiler (6) aufweist, welcher eine Bezugsfrequenz mit einem von diesen Umschaltmitteln (8) abhängigen Teilungsfaktor beaufschlagt, eine Empfangseinheit (14), die mit einer Verarbeitungseinheit (16) verbunden ist, welche so ausgebildet ist, daß sie die genannte Abweichung zwischen der ihr zugeordneten Ordnungszahl und der von der entsprechenden Empfangseinheit (14) empfangenen Ordnungszahl bestimmt, und zur Betätigung der Umschaltmittel (8) die Verarbeitungseinheit (16) umfaßt, die ein Interfaceelement (19) für Mittel zur Übertragung auf kurze Entfernung aufweist.

9. Übertragungssystem nach Anspruch 6, dadurch gekennzeichnet, daß dieser Oszillator (4) einen Modulationseingang für ein Signal umfaßt, das aus einer Kette mit einer Erfassungsanordnung (2) für seismische Signale, einem Codierungselement (COD) und Verstärkungsmitteln (9) stammt.

**Claims**

1. Method for the semi-sequential transmission of signals, by radio waves, between a number of N data acquisition units (A1, A2... AN) of a seismic reception device and a central control and recording laboratory, using a restricted number n of different transmission frequencies (f1, f2... fn), these being considerably less than the number N of data acquisition units (A1, A2... AN) of the said equipment, each one being designed to collect the signals received by at least one seismic receiver (R1... RN) positioned along the seismic profile to be studied, the said signals being digitalised and recorded and, when commanded by the central laboratory, the digitalised signals are transmitted by radio to the said laboratory, characterised in that it comprises :
– the allocation of a serial number to each unit, depending on its position along the seismic profile
– the sub division of the data acquisition equipment into groups, each containing no more than n data acquisition units
– the transmission, by the laboratory, of a transmission control signal designating, successively, the serial number of the first data acquisition unit for each of the groups
– a comparison, by each of the N data acquisition units comprising the equipment, between the serial number designated by the control signal and its own serial number and whether the said difference is compatible with the number of frequencies available
– switching the means of transmission onto a corresponding transmission frequency, this being predetermined in accordance with the said difference, the data acquisition units of the same group therefore sharing all the transmission frequencies available, and
– the transmission of signals between the data acquisition units of the same group and the central laboratory, each using the particular frequency imposed by the said comparison.

2. Method in accordance with claim 1, characterised in that the comparison stage comprises the selection, from among a list of n transmission frequencies available, of a frequency associated with the difference between the serial number designated and the serial number allocated to each data acquisition unit, if the said difference is a number less than the number n of frequencies available.

3. Method in accordance with claim 1, characterised in that the stage for subdividing all the N data acquisition units into groups comprises the selection of a determined number n of transmission frequencies so that any data acquisition unit of the data acquisition equipment may, when commanded, communicate with the central laboratory.

4. Method in accordance with claim 4, characterised in that the selection of and the number of frequencies is effected by a command applied directly to each data acquisition unit.

5. Method in accordance with claim 4, characterised in that it comprises the transmission of a remote control signal, this permitting the number and value of the frequencies used to be selected.

6. System for the semi-sequential transmission of signals, by radio waves, between a number of data acquisition units (A1 -AN) of a seismic reception device and a central control and recording laboratory (1), using a restricted number n of transmission frequencies (f1, f2... fn), this being considerably less than the number N of data acquisition units forming part of the said equipment, characterised in that all the data acquisition units of the said equipment and the central laboratory are each provided with a means of radio transmission and reception (13) which can be switched equally onto any one of the transmission frequencies (f1, f2... fn), each of the data acquisition units also comprising a means of data storage for a serial number, this depending on its position along the seismic profile, a means of determining the difference between the serial number allocated and the number designated by the command signals transmitted by the central laboratory and a switching device (8) for selecting from among all the frequencies (f1 to fn) available and within the limiting number n, a predetermined transmission frequency associated with the said difference.

7. Transmission system in accordance with claim 6, characterised in that it comprises a processing module (16) equipped with a calculating module (17), a data storage module 18 and an interface module (9) for the operator to apply the serial number, this depending on the position of each data acquisition unit along the profile.

8. Transmission system in accordance with claim 6, characterised in that the means of radio transmission and reception associated with each data acquisition unit comprises an oscillator (4) controlled by an electrical voltage and a circuit in the form of a loop comprising a frequency synthesiser and pre-divider (6) applying a dividing factor at a reference frequency, this depending on the said switching device (8), a reception module (14) connected to a processing module (16) designed to determine the said difference between the serial number allocated and the serial number received by the corresponding reception module (14) and to operate the switching device (8), the processing module (16) comprising an interface module (19) for use with a means of transmission over a short distance.

9. Transmission system in accordance with claim 6 characterised in that the said oscillator (4) comprises a modulation input for a signal originating from a system comprising a data acquisition module (2) for seismic signals, a coded module (COD) and a means of amplification (9).

## FIG.1

## FIG.2